(19) Europäisches Patentamt
European Patent Office
Office européen des brevets

(11) **EP 3 233 756 B1**

# (12) FASCICULE DE BREVET EUROPEEN

(45) Date de publication et mention
de la délivrance du brevet:
**24.10.2018 Bulletin 2018/43**

(21) Numéro de dépôt: **15820100.4**

(22) Date de dépôt: **17.12.2015**

(51) Int Cl.:
*C04B 35/50* (2006.01)    *C04B 35/51* (2006.01)
*C04B 35/64* (2006.01)    *G21C 3/62* (2006.01)
*G21C 21/02* (2006.01)

(86) Numéro de dépôt international:
**PCT/EP2015/080266**

(87) Numéro de publication internationale:
**WO 2016/097171 (23.06.2016 Gazette 2016/25)**

(54) **PROCEDE DE FABRICATION D'UNE PASTILLE D'AU MOINS UN OXYDE METALLIQUE**

VERFAHREN ZUR HERSTELLUNG EINES PELLETS AUS MINDESTENS EINEM METALLOXID

PROCESS FOR MANUFACTURING A PELLET OF AT LEAST ONE METAL OXIDE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **18.12.2014 FR 1462740**

(43) Date de publication de la demande:
**25.10.2017 Bulletin 2017/43**

(73) Titulaires:
• **Orano Cycle
92400 Courbevoie (FR)**
• **Commissariat à l'Énergie Atomique
et aux Énergies Alternatives
75015 Paris (FR)**

(72) Inventeur: **VAUDEZ, Stéphane
13100 Aix-en-Provence (FR)**

(74) Mandataire: **Brevalex
95, rue d'Amsterdam
75378 Paris Cedex 8 (FR)**

(56) Documents cités:
**FR-A1- 2 860 639    FR-A1- 2 998 288
US-A- 4 052 330    US-A- 5 641 435**

**Description**

**DOMAINE TECHNIQUE**

L'invention se rapporte à un procédé de fabrication d'une pastille d'au moins un oxyde métallique, par exemple une pastille d'un oxyde mixte d'uranium et de plutonium $(U,Pu)O_2$.

En particulier, ce procédé de fabrication met en oeuvre un procédé de frittage permettant de préparer un oxyde métallique simple, ou encore un oxyde mixte d'au moins deux métaux, à partir d'une poudre compactée des oxydes simples métalliques correspondants, cet oxyde métallique simple ou mixte présentant une densité apparente ainsi qu'une stabilité thermique de cette densité apparente améliorées, même dans l'hypothèse où le ou les oxydes simples de départ comprennent des traces d'espèces carbonées.

De tels oxydes métalliques, simples ou mixtes, et pastilles présentent un grand intérêt pour la fabrication de combustible destinés à de nombreux types de réacteurs nucléaires, notamment à des réacteurs à eau légère ou à des réacteurs à neutrons rapides.

**ÉTAT DE LA TECHNIQUE ANTÉRIEURE**

Parmi les oxydes métalliques utilisés dans le domaine de l'industrie nucléaire, les oxydes d'uranium ainsi que certains oxydes mixtes à base d'uranium, et notamment les oxydes mixtes d'uranium et de plutonium $(U,Pu)O_2$, font partie des oxydes métalliques les plus couramment utilisés pour la fabrication de combustibles nucléaires.

En effet, le plutonium mélangé le plus souvent à l'uranium, constitue une matière énergétique qui peut être valorisée dans les réacteurs nucléaires, que ce soit dans les réacteurs à eau légère (REL), parmi lesquels les réacteurs à eau pressurisée (REP) et les réacteurs à eau bouillante (REB), ou encore dans les réacteurs à neutrons rapides (RNR).

Les oxydes mixtes métalliques utilisés pour la fabrication de combustibles nucléaires, qui se présentent classiquement sous forme de pastilles compactées et frittées, doivent répondre à un certain nombre d'exigences. Parmi ces exigences, de telles pastilles de combustible nucléaire doivent présenter une densité apparente, qui soit non seulement élevée, mais qui soit également stable, selon des critères spécifiés ci-après.

La densité apparente finale des pastilles dépend non seulement des propriétés de la poudre du ou des oxydes métalliques à partir de laquelle les pastilles sont obtenues, telles que l'homogénéité ou encore la très faible teneur en impuretés, voire l'absence d'impuretés, mais également des paramètres du procédé de fabrication de ces pastilles et, en particulier, des paramètres de l'étape de frittage.

De manière générale, les procédés actuels de fabrication de pastilles de combustible nucléaire d'un oxyde mixte $(U,Pu)O_2$, (également dénommé "combustible nucléaire MOX" ou encore "combustible MOX"), reposent sur un procédé classique dit de "métallurgie des poudres" qui comprend, de manière schématique, les étapes suivantes :

- la préparation de poudres d'oxyde d'uranium $UO_2$ et d'oxyde de plutonium $PuO_2$, qui comprend notamment la synthèse, le mélange et/ou la micronisation desdites poudres,
- la mise en forme des poudres ainsi préparées sous forme de pastilles, puis
- la densification des poudres ainsi mises en forme, notamment par un traitement thermique tel que le frittage.

L'étape de mise en forme est généralement réalisée par pressage et/ou compactage consistant en l'application d'une pression de compaction de 300 MPa à 500 MPa.

FR2860639 divulgue un procédé de fabrication de pastilles de combustible nucléaire à base d'oxyde mixte d'uranium et de plutonium à partir de charges de poudre de $UO_2$ et de $PuO_2$ comprenant une étapes de frittage et plusieurs cycles thermiques.

De manière classique, l'étape de densification des poudres préalablement mises en forme est réalisée par frittage réalisé par la mise en oeuvre, dans un four, d'un cycle thermique comprenant :

- une montée en température, par exemple de la température ambiante jusqu'à une température de palier de 1700°C,
- un maintien, pendant une durée de 4 h, à cette température de palier de 1700°C, puis
- une descente en température depuis cette température de palier de 1700°C jusqu'à la température ambiante.

Ce cycle thermique qui vient d'être décrit est réalisé sous une atmosphère qui est contrôlée en entrée du four et qui comprend un mélange d'argon, de dihydrogène dans un rapport volumique $Ar/H_2$ de 95/5, et de l'eau.

La présence d'eau dans l'atmosphère permet de contrôler le potentiel d'oxygène de l'atmosphère lors du frittage et ainsi de fixer la stoechiométrie requise pour le combustible. Cette stoechiométrie est définie par le rapport O/M correspondant au rapport entre la teneur molaire en oxygène, notée O, et la teneur molaire en métal(aux), notée M.

Ce rapport O/M est, en effet, variable en fonction du type de réacteurs dans lequel les pastilles de combustible nucléaire vont être ultérieurement utilisées.

Ainsi, pour une utilisation dans des réacteurs du type RNR, les pastilles d'oxyde mixte $(U,Pu)O_2$, qui ont une teneur atomique en Pu comprise entre 15% et 30% de la teneur atomique totale en U+Pu, doivent avoir un rapport O/M d'au moins 1,94 et, plus généralement, autour de 1,98.

Pour atteindre de telles valeurs de rapport O/M, l'atmosphère d'argon hydrogéné, dans le rapport volumique $Ar/H_2$ de 95/5, qui règne dans le four lors du cycle thermique appliqué pour la réalisation de l'étape de densification, a une teneur en eau comprise :

- entre 10 ppm et 200 ppm pour une teneur atomique en Pu de l'ordre de 15% de la teneur atomique totale en U+Pu, et
- entre 100 ppm et 500 ppm pour une teneur atomique en Pu de l'ordre de 30% de la teneur atomique totale en U+Pu.

Pour une utilisation dans des réacteurs du type REL, les pastilles d'oxyde mixte $(U,Pu)O_2$, qui ont une teneur atomique en Pu inférieure ou égale à 12% de la teneur atomique totale en U+Pu, doivent avoir un rapport O/M de 2,00. Une telle valeur est atteinte avec une quantité d'eau, dans cette atmosphère d'argon hydrogéné à 5% en volume de dihydrogène appliquée dans le four, supérieure ou égale à 1000 ppm

Le procédé classique de métallurgie des poudres permet donc d'obtenir, à partir de poudres d'oxyde d'uranium $UO_2$ et d'oxyde de plutonium $PuO_2$, le cas échéant mélangées avec de la chamotte (qui est un oxyde mixte $(U,Pu)O_2$ provenant du broyage de rebuts recyclés), des pastilles d'oxydes mixtes $(U,Pu)O_2$.

Parmi l'ensemble des critères visés, les pastilles d'oxydes mixtes $(U,Pu)O_2$ doivent notamment répondre aux deux critères suivants :

- une densité apparente supérieure ou égale à 94,5% de la densité théorique, qui correspond à une porosité fermée de moins de 6,5%, et
- l'absence de dédensification de ces pastilles qui se traduit par la stabilité thermique de cette densité apparente, qui ne doit pas diminuer sous l'effet d'une isotherme de frittage prolongé, classiquement réalisée par application d'une température de 1700°C pendant une période de 24 h.

Si la plupart des pastilles frittées d'oxydes mixtes $(U,Pu)O_2$ fabriquées par le procédé de métallurgie des poudres permettent de répondre aux deux critères ci-dessus, on observe que certaines d'entre elles n'atteignent toutefois pas la densité apparente spécifiée et/ou la stabilité thermique de cette densité apparente requise.

C'est le cas particulier des pastilles d'oxydes mixtes $(U,Pu)O_2$ fabriquées selon ce procédé de métallurgie des poudres, à partir de poudres d'oxyde d'uranium $UO_2$ et d'oxyde de plutonium $PuO_2$ comprenant de faibles quantités, encore appelées "traces", d'espèces carbonées, dans une teneur massique typiquement supérieure ou égale à 500 ppm d'équivalent carbone. Les inventeurs ont, en effet, relevé que de telles pastilles frittées présentent une dédensification, sous l'effet d'une isotherme de frittage à 1700°C pendant 24 h, et ne répondent, par conséquent, pas au second critère de stabilité thermique de la densité apparente énoncé ci-dessus. Ce phénomène de dédensification, que l'on observe lorsque les poudres de $UO_2$ et de $PuO_2$ comprennent des traces d'espèces carbonées, se traduit par un gonflement des pastilles qui deviennent poreuses, ce qui les rend inadaptées à leur utilisation dans un réacteur nucléaire.

Ces espèces carbonées en une teneur préjudiciable à la densité apparente et/ou à la stabilité thermique de la densité apparente des pastilles frittées d'oxydes mixtes $(U,Pu)O_2$ peuvent avoir pour origine le procédé de synthèse proprement dit de la poudre d'oxyde d'uranium $UO_2$ et/ou de la poudre d'oxyde de plutonium $PuO_2$ destinées à être mises en oeuvre dans le procédé de métallurgie des poudres.

Ces poudres $UO_2$ et $PuO_2$ sont classiquement synthétisées par voie gazeuse ou par voie liquide. La synthèse par voie liquide requiert, notamment, la mise en oeuvre d'étapes de précipitation, de filtration puis de calcination. Or, l'étape de calcination conditionne grandement la teneur ainsi que la nature des espèces carbonées présentes dans lesdites poudres $UO_2$ et $PuO_2$ en résultant. Cette étape de calcination est classiquement réalisée sur un précipité filtré, à une température inférieure à 1000°C et sous atmosphère oxydante vis-à-vis du carbone contenu dans les espèces carbonées, afin de convertir le précipité en oxydes, ces oxydes étant ultérieurement traités par le procédé de métallurgie des poudres précité.

Toutefois, les conditions de température et d'atmosphère de l'étape de calcination, qui sont favorables à la diminution de la teneur finale en espèces carbonées dans les oxydes métalliques, ne peuvent pas toujours être respectées, pour des raisons technologiques (problème de tenue de certains des éléments internes de fours,...), de sécurité (risque d'explosion) et/ou de maîtrise de la nature des produits obtenus (modification du rapport O/M et/ou encore de la structure cristallographique des oxydes métalliques,...).

La pollution des poudres d'oxyde d'uranium $UO_2$ et/ou d'oxyde de plutonium $PuO_2$ en espèces carbonées peut également être due à d'autres sources, par exemple aux additifs (liants, lubrifiants organiques) mis en oeuvre lors du procédé de synthèse de ces poudres $UO_2$ et $PuO_2$. Il peut également s'agir de la pollution engendrée par les conditions opératoires de ce procédé de synthèse (atmosphère, conteneur de broyage, conteneur de transport).

Pour tenter de remédier à la présence de ces espèces carbonées dans les poudres d'oxyde d'uranium $UO_2$ et/ou d'oxyde de plutonium $PuO_2$, notamment lorsque leur teneur en équivalent carbone est supérieure ou égale à 500 ppm, il a été proposé de réaliser l'étape de densification de ces poudres $UO_2$ et $P_{11}O_2$ (préalablement mises en forme) par un frittage opéré dans une atmosphère présentant des conditions plus oxydantes pour le carbone, par exemple par ajout d'eau, de manière à favoriser la dégradation et/ou la volatilisation de ces espèces carbonées et de leurs sous-produits.

Or, la mise en oeuvre d'un frittage dans de telles conditions plus oxydantes ne se révèle pas non plus satisfaisante puisque l'on observe également une dédensification inattendue des pastilles.

Plus précisément, la porosité des pastilles fabriquées par le procédé classique de métallurgie des poudres, dans lequel le frittage est opéré dans des conditions plus oxydantes, atteint des valeurs pouvant aller jusqu'à 10% en volume (10% vol). Une telle porosité, essentiellement fermée, ne peut pas non plus être réduite par la modification de certains des paramètres de l'étape de densification (frittage) comme l'augmentation de la durée de l'étape de maintien à la température de palier de 1700°C ou encore l'augmentation de la température de ce palier.

Le but de la présente invention est donc de pallier les inconvénients mentionnés ci-dessus et de proposer un procédé de frittage d'une poudre compactée comprenant $UO_2$ et $PuO_2$ permettant d'obtenir un oxyde mixte $(U,Pu)O_2$, notamment sous la forme de pastilles, qui réponde aux deux critères énoncés ci-dessus, à savoir :

- une densité apparente qui soit supérieure ou égale à 94,5% de la densité théorique, et
- une stabilité thermique de cette densité apparente sous l'effet d'une isotherme de frittage à 1700°C pendant 24 h,

et ce, en particulier dans le cas où la poudre compactée comprend des espèces carbonées dans des teneurs en équivalent carbone qui sont supérieures ou égales à 500 ppm.

Un autre but de l'invention est de proposer un procédé de frittage qui qui ne soit pas seulement limité au frittage d'une poudre compactée comprenant $UO_2$ et $PuO_2$ pour l'obtention de l'oxyde mixte $(U,Pu)O_2$ correspondant, mais qui puisse être transposé au frittage :

- d'une poudre compactée comprenant au moins deux oxydes métalliques différents pour l'obtention de l'oxyde mixte métallique correspondant, chaque métal étant choisi parmi un actinide et un lanthanide, voire
- d'une poudre compactée d'un oxyde métallique, ce métal étant choisi parmi un actinide et un lanthanide,

l'oxyde mixte métallique, ou l'oxyde métallique simple, ainsi obtenu présentant une densité apparente ainsi qu'une stabilité thermique de cette densité apparente améliorées, même dans le cas où la poudre compactée comprend des traces d'espèces carbonées, dans une teneur massique typiquement supérieure ou égale à 500 ppm d'équivalent carbone.

Un autre but de l'invention est de proposer un procédé de fabrication d'une pastille, telle qu'une pastille de combustible nucléaire, à partir d'une poudre d'au moins un oxyde d'un métal choisi parmi un actinide et un lanthanide, cette poudre comprenant, le cas échéant, des traces d'espèces carbonées, cette pastille présentant concomitamment une densité apparente et une stabilité thermique de cette densité apparente améliorées ainsi qu'une microstructure se caractérisant par une homogénéité de répartition des phases dans le cas d'une pastille d'oxyde mixte métallique, par exemple une homogénéité de répartition de la phase U-Pu dans le cas d'un oxyde mixte $(U,Pu)O_2$.

## EXPOSÉ DE L'INVENTION

Les buts précédemment énoncés ainsi que d'autres sont atteints, en premier lieu, par un procédé de frittage d'une poudre compactée d'au moins un oxyde d'un métal $M_1$ choisi parmi un actinide et un lanthanide, ce procédé comprenant les étapes successives (a) à (c) suivantes, réalisées dans un four et sous une atmosphère comprenant un gaz inerte, du dihydrogène et de l'eau :

(a) une montée en température d'une température initiale $T_I$ jusqu'à une température de palier $T_P$, $T_P$ étant comprise entre 1400°C et 1800°C,
(b) un maintien, pendant une durée comprise entre 1 h et 10 h, de la température à la température de palier $T_P$, et
(c) une descente en température depuis la température de palier $T_P$ jusqu'à une température finale $T_F$.

Selon l'invention, le ratio de la pression partielle du dihydrogène, notée $P(H_2)$, sur la pression partielle de l'eau, notée $P(H_2O)$, dans ladite atmosphère est tel que :

- $500 < P(H_2)/P(H_2O) \leq 50000$, lors de l'étape (a), de $T_I$ jusqu'à atteindre une première température intermédiaire $T_{i1}$ entre 1000°C et $T_P$, et

- $P(H_2)/P(H_2O) \leq 500$, au moins lors de l'étape (c), à partir d'une deuxième température intermédiaire entre $T_P$ et 1000°C, jusqu'à atteindre $T_F$.

Le procédé de frittage selon l'invention permet d'obtenir un oxyde métallique qui présente une densité apparente supérieure ou égale à 94,5% de la densité théorique de l'oxyde métallique considéré, cette densité apparente étant, en outre, stable thermiquement.

Il est précisé que par l'expression "au moins un oxyde d'un métal $M_1$ choisi parmi un actinide et un lanthanide", on entend que la poudre compactée peut n'être constituée que par un seul oxyde du métal $M_1$, mais également par deux, voire plus, oxydes du métal $M_1$, ce métal $M_1$ étant alors à deux, voire plus, degrés d'oxydation différents.

La mise en oeuvre du procédé de frittage selon l'invention permet, par exemple, d'obtenir du dioxyde d'uranium $UO_2$, du dioxyde de plutonium $PuO_2$ ou encore du dioxyde de cérium, ou cérine, $CeO_2$, ces oxydes métalliques simples étant caractérisés par une densité apparente et par une stabilité thermique de cette densité apparente significativement améliorées.

Dans une variante particulièrement avantageuse de l'invention, la poudre compactée comprend, en outre, au moins un oxyde d'un métal $M_2$ choisi parmi le scandium Sc, l'yttrium Y, un actinide et un lanthanide, $M_2$ étant différent de $M_1$, moyennant quoi, à l'issue de l'étape (c), on obtient un oxyde mixte comprenant $M_1$ et $M_2$.

Comme précédemment mentionné pour le métal $M_1$, par l'expression "au moins un oxyde d'un métal $M_2$ choisi parmi le scandium, l'yttrium, un actinide et un lanthanide", on entend que la poudre compactée peut ne comprendre qu'un seul oxyde du métal $M_2$ ou, au contraire, plusieurs oxydes du métal $M_2$, ce métal $M_2$ étant à des degrés d'oxydation distincts.

Dans une telle variante, le procédé de frittage selon l'invention permet d'obtenir un oxyde mixte des métaux $M_1$ et $M_2$, à partir de l'oxyde du métal $M_1$ et de l'oxyde du métal $M_2$, un tel oxyde mixte présentant une densité apparente supérieure ou égale à 94,5% de la densité théorique de l'oxyde mixte considéré, cette densité apparente étant, en outre, stable thermiquement, ce qui se traduit par une absence de gonflement dudit oxyde mixte fritté tel qu'obtenu à l'issue du procédé de frittage.

La mise en oeuvre du procédé de frittage selon l'invention permet, par exemple, d'obtenir des oxydes mixtes d'uranium et de plutonium $(U,Pu)O_2$ ou encore des oxydes mixtes de cérium et d'yttrium, également appelés cérine yttriée, $(Ce,Y)O_2$, ces oxydes métalliques mixtes étant également caractérisés par une densité apparente et par une stabilité thermique de cette densité apparente significativement améliorées.

Ce résultat est obtenu, de manière inattendue et surprenante, par la mise en oeuvre de deux phases distinctes :

- une première phase dans laquelle le ratio $P(H_2)/P(H_2O)$ est tel que $500 < P(H_2)/P(H_2O) \leq 50000$ et qui correspond à un frittage réalisé sous atmosphère dite "hydrogénée" dans des conditions réductrices pour le carbone contenu dans les espèces carbonées. Cette première phase est réalisée pendant l'étape (a) de montée en température et, plus précisément, à partir de la température initiale, notée $T_I$, jusqu'à la première température intermédiaire, notée $T_{i1}$, située entre 1000°C et la température de palier, notée $T_P$; et
- une deuxième phase dans laquelle le ratio $P(H_2)/P(H_2O)$ est tel que $P(H_2)/P(H_2O) \leq 500$ et qui correspond à un frittage réalisé dans des conditions moins réductrices, ou plus oxydantes que les précédentes, pour le carbone contenu dans les espèces carbonées. Cette deuxième phase est réalisée au moins pendant l'étape (c) de descente en température et, plus précisément, à partir de la deuxième température intermédiaire, notée $T_{i2}$, située entre $T_P$ et 1000°C, jusqu'à atteindre la température finale $T_F$.

Ces première et deuxième phases thermiques se distinguent donc l'une de l'autre par des valeurs de ratio des pressions partielles $P(H_2)/P(H_2O)$ distinctes. Ces valeurs de ratio peuvent être ajustées par introduction, dans le four, de quantités adaptées, soit d'eau, soit de dioxygène qui réagit alors avec le dihydrogène pour former l'eau.

Ces deux phases distinctes peuvent être mises en oeuvre, soit lors d'un même cycle thermique, soit lors de deux cycles thermiques consécutifs.

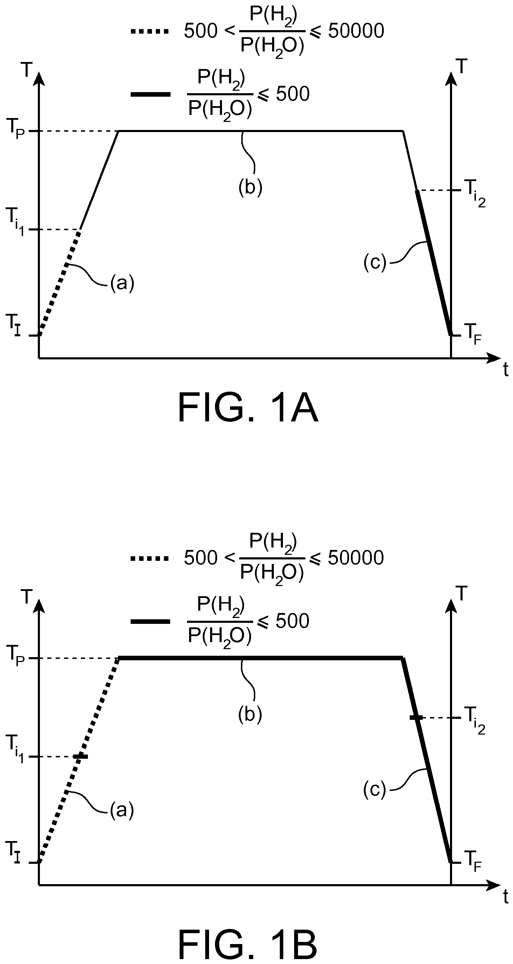

Les figures 1A et 1B annexées illustrent deux modes de mises en oeuvre du premier cas dans lequel ces deux phases distinctes sont mises en oeuvre lors du même cycle thermique.

En référence à la figure 1A annexée, le cycle thermique, qui comprend la première phase dans laquelle $500 < P(H_2)/P(H_2O) \leq 50000$ et la deuxième phase dans laquelle $P(H_2)/P(H_2O) \leq 500$, est constitué par l'étape (a) de montée en température de la température initiale $T_I$ jusqu'à la température de palier $T_P$, l'étape (b) de maintien de la température à la température de palier $T_P$, et l'étape (c) de descente en température depuis la température de palier $T_P$ jusqu'à la température finale $T_F$.

Comme repéré sur la figure 1A, l'étape (a) de montée en température comprend une première température intermédiaire $T_{i1}$, située entre la température initiale $T_I$ et la température de palier $T_P$, cette première température intermédiaire $T_{i1}$, étant comprise entre 1000°C et Tp.

De même, l'étape (c) de descente en température comprend une deuxième température intermédiaire $T_{i2}$

située entre la température de palier $T_P$ et la température finale $T_F$, cette deuxième température intermédiaire $T_{i2}$ étant comprise entre $T_P$ et 1000°C.

Sur la figure 1A, la première phase, dans laquelle $500 < P(H_2)/P(H_2O) \leq 50000$, est repérée par un trait discontinu s'étendant de $T_I$ jusqu'à $T_{i1}$, tandis que la deuxième phase, dans laquelle $P(H_2)/P(H_2O) \leq 500$, est repérée par un trait épais s'étendant de $T_{i2}$ jusqu'à $T_F$.

Le procédé de frittage selon l'invention se caractérise donc par la mise en oeuvre d'une partie du cycle thermique sous une atmosphère réductrice pour le carbone et le ou les oxydes métalliques de départ, qui correspondent audit au moins un oxyde du métal $M_1$ et, le cas échéant, audit au moins un oxyde du métal $M_2$, avec $500 < P(H_2)/P(H_2O) \leq 50000$, une telle démarche allant clairement à l'encontre de la pratique actuelle consistant à éliminer ces espèces carbonées par dégradation et/ou volatilisation. Cette première phase est réalisée lors de l'étape (a) de montée en température, pour le moins de $T_I$ à $T_{i1}$, voire de $T_I$ à $T_P$.

Le cycle thermique du procédé de frittage selon l'invention comprend également une partie réalisée conformément à la pratique actuelle, soit sous une atmosphère moins réductrice (ou plus oxydante) que la précédente, avec une teneur en eau augmentée telle que $P(H_2)/P(H_2O) \leq 500$. Cette deuxième phase est réalisée au moins lors de l'étape (c) de descente en température, pour le moins de $T_{i2}$ à $T_F$, voire de $T_P$ à $T_F$.

La mise en oeuvre de cette deuxième phase permet notamment de fixer le rapport O/M de l'oxyde métallique, simple ou mixte, à la valeur souhaitée, par exemple en fonction du type RNR ou REL du réacteur dans lequel cet oxyde métallique tel qu'obtenu est destiné à être utilisé.

En particulier, pour augmenter le rapport O/M, on peut avantageusement mettre en oeuvre cette deuxième phase du cycle thermique dans laquelle $P(H_2)/P(H_2O) \leq 500$, non seulement pendant toute la durée de l'étape (c) de descente en température, à partir de la température de palier $T_P$ et jusqu'à $T_F$, mais également pendant tout ou partie de l'étape (b) de maintien de la température à la température de palier $T_P$.

On a ainsi représenté sur la figure 1B annexée, le cas dans lequel la deuxième phase du cycle thermique est réalisée pendant toute la durée de l'étape (b) de maintien de la température à la température de palier $T_P$, et de l'étape (c) de descente en température, de la température de palier $T_P$ jusqu'à la température finale $T_F$.

Dans une variante du procédé de frittage selon l'invention, la première température intermédiaire $T_{i1}$, de l'étape (a) de montée en température est comprise entre 1300°C et $T_P$.

La première phase du cycle thermique dans laquelle le ratio $P(H_2)/P(H_2O)$ est tel que $500 < P(H_2)/P(H_2O) \leq 50000$ peut notamment être réalisée pendant toute la durée de l'étape (a) de montée en température, de $T_I$ jusqu'à la température de palier $T_P$, comme illustré sur la figure 1B.

Dans une autre variante du procédé de frittage selon l'invention, la deuxième température intermédiaire $T_{i2}$ de l'étape (c) de descente en température est comprise entre $T_P$ et 1300°C.

Dans une autre variante du procédé de frittage selon l'invention, la deuxième phase du cycle thermique dans laquelle le ratio $P(H_2)/P(H_2O)$ est tel que $P(H_2)/P(H_2O) \leq 500$ peut être mise en oeuvre dès que la première température intermédiaire $T_{i1}$, est atteinte et maintenu jusqu'à ce que la température finale $T_F$ soit atteinte, étant rappelé que cette première température intermédiaire $T_{i1}$, est comprise entre 1000°C et la température de palier $T_P$. En d'autres termes, dans cette variante, et à l'exception du cas dans lequel $T_{i1}=T_P$, le ratio $P(H_2)/P(H_2O) \leq 500$ est appliqué en partie au cours de l'étape (a) de montée en température, sur l'intervalle des températures comprises entre la première température intermédiaire $T_{i1}$ et la température de palier $T_P$, ainsi que lors de l'étape (b) de maintien de la température à la température de palier $T_P$ et de l'étape (c) de descente en température, de la température de palier $T_P$ jusqu'à la température finale $T_F$.

Le cas particulier dans lequel $T_{i1}=T_P$ est illustré sur la figure 1B : le ratio $P(H_2)/P(H_2O) \leq 500$ est appliqué lors de l'étape (b) de maintien de la température à la température de palier $T_P$ et lors de l'étape (c) de descente en température, de la température de palier $T_P$ jusqu'à la température finale $T_F$.

La deuxième phase du cycle thermique de frittage peut donc suivre immédiatement la première phase. Toutefois, rien n'interdit d'envisager que l'étape (a) du procédé de frittage selon l'invention comprenne un palier intermédiaire de maintien de la température à la première température intermédiaire $T_{i1}$, ce palier intermédiaire séparant les première et deuxième phases du cycle thermique.

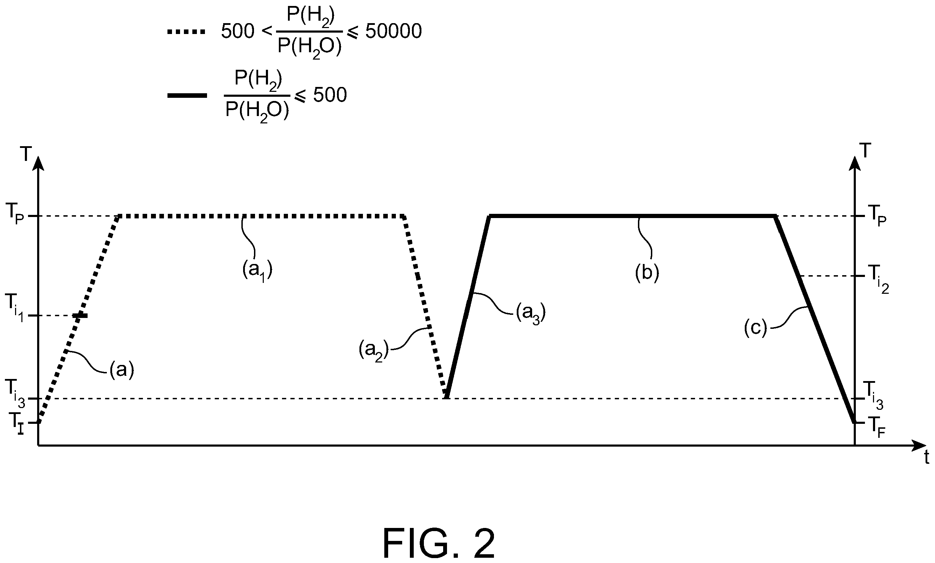

La figure 2 annexée illustre un mode de mise en oeuvre du second cas dans lequel les deux phases distinctes sont réalisées au cours de deux cycles thermiques consécutifs.

Ainsi, lorsque les deux phases distinctes sont mises en oeuvre lors de deux cycles thermiques consécutifs, le procédé de frittage selon l'invention comprend, en outre, entre les étapes (a) et (b), les étapes ($a_1$) à ($a_3$) successives suivantes :

($a_1$) un maintien, pendant une durée comprise entre 1 h et 10 h, de la température à la température de palier $T_P$,

($a_2$) une descente en température depuis la température de palier $T_P$ jusqu'à une troisième température intermédiaire, notée $T_{i3}$,

($a_3$) une montée en température de la troisième température intermédiaire $T_{i3}$ jusqu'à la température de palier $T_P$,

le ratio $P(H_2)/P(H_2O)$ dans ladite atmosphère étant tel que :

- $500 < P(H_2)/P(H_2O) \leq 50000$, lors des étapes (a), $(a_1)$ et $(a_2)$, et
- $P(H_2)/P(H_2O) \leq 500$, lors des étapes $(a_3)$, (b) et (c).

En référence à la figure 2 annexée, la première phase dans laquelle le ratio $P(H_2)/P(H_2O)$ est tel que $500 < P(H_2)/P(H_2O) \leq 50000$ et qui correspond à un frittage réalisé sous atmosphère dite "hydrogénée", est repérée par un trait discontinu s'étendant sur le premier cycle thermique constitué par l'étape (a) de montée en température de $T_I$ jusqu'à $T_P$, l'étape $(a_1)$ de maintien de la température à $T_P$, et l'étape $(a_2)$ de descente en température de $T_P$ jusqu'à $T_{i3}$.

La deuxième phase dans laquelle le ratio $P(H_2)/P(H_2O)$ est tel que $P(H_2)/P(H_2O) \leq 500$ et qui correspond à un frittage réalisé dans des conditions moins réductrices, ou plus oxydantes que les précédentes, est repérée par un trait épais s'étendant sur le deuxième cycle thermique constitué par l'étape $(a_3)$ de montée en température de $T_{i3}$ jusqu'à la température de palier $T_P$, l'étape (b) de maintien de la température à $T_P$, et l'étape (c) de descente en température de $T_P$ jusqu'à $T_F$.

Dans une variante avantageuse, la troisième température intermédiaire $T_{i3}$ est comprise entre 20°C et 500°C.

Le procédé de frittage selon l'invention réalisé au moyen de deux cycles thermiques consécutifs tels que représentés à la figure 2 peut être mis en oeuvre, soit dans un même four de frittage ou, de manière plus avantageuse, dans deux fours de frittage distincts, chacun des fours étant alors plus particulièrement adapté aux conditions opératoires définies par le rapport $P(H_2)/P(H_2O)$.

Les variantes particulières du procédé de frittage qui vont être décrites ci-après sont applicables, qu'il y ait un ou deux cycles thermiques mis en oeuvre.

Dans une variante du procédé de frittage selon l'invention, qui permet en particulier d'augmenter le rapport O/M, ce procédé peut comprendre, en outre, après l'étape (c), un traitement thermique d'oxydation, par exemple un traitement d'oxydation ménagée.

A titre d'exemple, un tel traitement thermique d'oxydation peut comprendre les étapes successives suivantes :

- une montée en température de la température ambiante jusqu'à une température de palier, cette température de palier étant par exemple comprise entre 900°C et 1400°C,
- un maintien à cette température de palier, par exemple pendant une durée comprise entre 1 h et 10 h, puis
- une descente en température depuis cette température de palier jusqu'à la température ambiante.

Dans une autre variante du procédé de frittage selon l'invention, la température de palier $T_P$ est de 1700°C.

Comme précédemment, pour l'étape (a), on peut envisager que l'étape (c) du procédé de frittage selon l'invention comprenne un palier intermédiaire de maintien de la température à la deuxième température intermédiaire $T_{i2}$, ce palier intermédiaire pouvant également séparer les première et deuxième phases du cycle thermique.

Dans une autre variante du procédé de frittage selon l'invention, la température initiale $T_I$ de l'étape (a) et/ou la température finale $T_F$ de l'étape (c) corresponde(nt) à la température ambiante.

Dans une autre variante du procédé de frittage selon l'invention, la montée en température de l'étape (a) et, le cas échéant, de l'étape $(a_3)$, s'effectue à une vitesse comprise entre 30°C/h et 400°C/h.

Dans une autre variante du procédé de frittage selon l'invention, la descente en température de l'étape (c) et, le cas échéant, de l'étape $(a_2)$, s'effectue à une vitesse comprise entre 100°C/h et 900°C/h.

Dans une autre variante du procédé de frittage selon l'invention, le gaz inerte de l'atmosphère régnant dans le four de frittage est choisi parmi l'argon, l'hélium et l'azote. Avantageusement, ce gaz inerte est l'argon.

Dans une autre variante du procédé de frittage selon l'invention, le rapport volumique entre le gaz inerte et le dihydrogène est compris entre 90/10 et 98/2.

De manière plus particulièrement avantageuse, ce rapport volumique gaz inerte/$H_2$ est de 95/5. Dans de telles conditions de rapport volumique de 95/5 en gaz inerte/$H_2$, l'eau est présente dans l'atmosphère régnant dans le four :

- en une quantité strictement inférieure à 100 ppm et, plus précisément, comprise entre 1 ppm (valeur comprise) et 100 ppm (valeur non comprise) lors de la première phase du cycle thermique du procédé de frittage selon l'invention, dans laquelle le ratio $P(H_2)/P(H_2O)$ est tel que $500 < P(H_2)/P(H_2O) \leq 50000$, et
- en une quantité supérieure ou égale à 100 ppm lors de la deuxième phase du cycle thermique du procédé de frittage selon l'invention, dans laquelle le ratio $P(H_2)/P(H_2O)$ est tel que $P(H_2)/P(H_2O) \leq 500$.

Dans une autre variante avantageuse du procédé de frittage selon l'invention, lorsque $M_1$, ou $M_2$, est un actinide, l'actinide est choisi parmi l'uranium U, le plutonium Pu, le thorium Th et l'américium Am, avantageusement parmi U, Pu et Th et, préférentiellement, parmi U et Pu.

Dans une autre variante du procédé de frittage selon l'invention, lorsque $M_1$, ou $M_2$, est un lanthanide, le lanthanide est le cérium Ce.

L'invention se rapporte, en deuxième lieu, à un procédé de fabrication d'une pastille d'au moins un oxyde d'un métal $M_1$ choisi parmi un actinide et un lanthanide et, notamment, à un procédé de fabrication d'une pastille de combustible nucléaire.

Selon l'invention, ce procédé de fabrication comprend les étapes successives suivantes :

- une préparation d'une poudre dudit au moins un oxyde de métal $M_1$,
- un compactage de la poudre préparée sous la forme d'une pastille, et
- un traitement thermique de la pastille de poudre compactée par le procédé de frittage tel que défini ci-dessus, les caractéristiques avantageuses de ce procédé de frittage pouvant être prises seules ou en combinaison.

En d'autres termes, ce procédé de fabrication d'une pastille d'au moins un oxyde d'un métal $M_1$ choisi parmi un actinide et un lanthanide comprend les étapes successives suivantes :

(1) une préparation d'une poudre dudit au moins un oxyde de métal $M_1$,
(2) un compactage de la poudre préparée sous la forme d'une pastille,
(3) une introduction de la pastille de poudre compactée dans un four et sous une atmosphère comprenant un gaz inerte, du dihydrogène et de l'eau,
(4) une montée en température d'une température initiale $T_I$ jusqu'à une température de palier $T_P$, $T_P$ étant comprise entre 1400°C et 1800°C,
(5) un maintien de la température, pendant une durée comprise entre 1 h et 10 h, à la température de palier $T_P$, et
(6) une descente en température depuis la température de palier $T_P$ jusqu'à une température finale $T_F$,

le ratio $P(H_2)/P(H_2O)$ dans ladite atmosphère étant tel que :

- $500 < P(H_2)/P(H_2O) \leq 50000$, lors de l'étape (4), de $T_I$ jusqu'à atteindre une première température intermédiaire $T_{i1}$, entre 1000°C et $T_P$, et
- $P(H_2)/P(H_2O) \leq 500$, au moins lors de l'étape (6), à partir d'une deuxième température intermédiaire $T_{i2}$ entre $T_P$ et 1000°C, jusqu'à atteindre $T_F$.

Le procédé de fabrication selon l'invention permet donc d'obtenir une pastille d'un oxyde métallique présentant densité apparente supérieure ou égale à 94,5% de la densité théorique de l'oxyde considéré, cette densité apparente étant, en outre, stable thermiquement, ne provoquant pas de gonflement de la pastille frittée, telle qu'obtenue après l'étape (6) de traitement thermique.

L'étape (1) de préparation de la poudre dudit au moins un oxyde de métal $M_1$ peut notamment comprendre au moins l'une des étapes choisies parmi la synthèse de cet oxyde de métal $M_1$, le broyage de cet oxyde de métal $M_1$ sous forme de poudre, la micronisation de cette poudre d'oxyde de métal $M_1$, le mélange de cette poudre d'oxyde de métal $M_1$ avec des additifs.

En particulier, dans le cas où la poudre compactée comprend, en outre, au moins un oxyde d'un métal $M_2$ choisi parmi un actinide et un lanthanide, $M_2$ étant différent de $M_1$, l'étape (1) de préparation de la poudre peut également comprendre au moins l'une des étapes décrites ci-dessus, lues relativement à $M_2$, (synthèse de l'oxyde de métal $M_2$, son broyage, sa micronisation et son mélange avec des additifs) et, en outre, l'étape consistant à réaliser le mélange de la poudre d'oxyde de métal $M_1$ avec la poudre d'oxyde de métal $M_2$.

L'invention se rapporte, en troisième lieu, à l'utilisation de la pastille d'au moins un oxyde d'un métal $M_1$ fabriquée par la mise en oeuvre du procédé de fabrication tel que défini ci-dessus, les caractéristiques avantageuses de ce procédé de fabrication pouvant être prises seules ou en combinaison.

Selon l'invention, cette pastille d'au moins un oxyde d'un métal $M_1$ peut être utilisée dans le domaine du nucléaire.

Dans une version avantageuse de l'invention, cette pastille d'au moins un oxyde d'un métal $M_1$ peut être utilisée comme combustible nucléaire dans un réacteur à neutrons rapides ou dans un réacteur à eau légère, tel qu'un réacteur à eau pressurisée ou un réacteur à eau bouillante.

D'autres caractéristiques et avantages de l'invention apparaîtront mieux à la lecture du complément de description qui suit et qui se rapporte à deux exemples de fabrication d'oxydes mixtes d'uranium et de plutonium selon l'invention, l'un présentant une teneur atomique en Pu, de l'ordre de 10% (exemple 1), et l'autre présentant une teneur atomique en Pu de l'ordre de 30% (exemple 2), ces teneurs atomiques en Pu étant données par rapport à la teneur atomique totale en Pu et U.

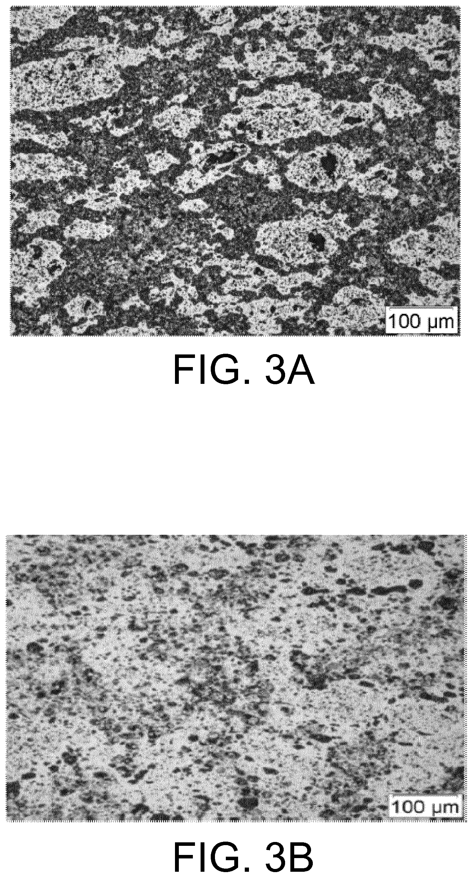

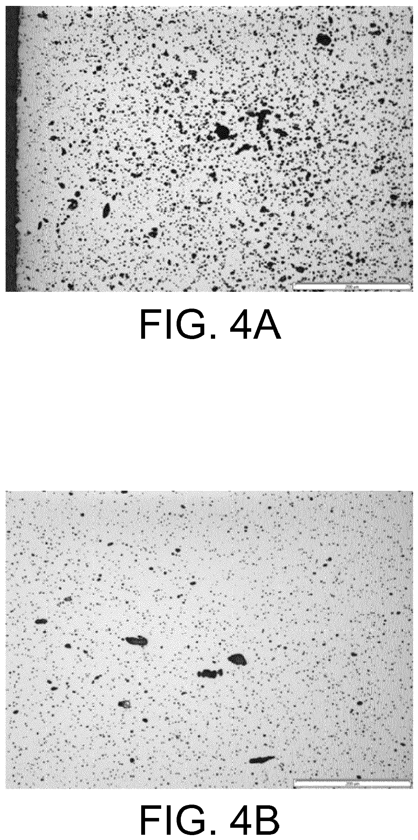

Ce complément de description, qui se réfère notamment aux figures 3A, 3B, 4A et 4B telles qu'annexées, est donné à titre d'illustration de l'objet de l'invention et ne constitue en aucun cas une limitation de cet objet.

**BRÈVE DESCRIPTION DES DESSINS**

Les figures 1A et 1B illustrent schématiquement les étapes du procédé de frittage selon l'invention mettant en oeuvre un seul cycle thermique.

La figure 2 illustre schématiquement les étapes du procédé de frittage selon l'invention mettant en oeuvre deux cycles thermiques consécutifs.

Les figures 3A et 3B correspondent à des photographies prises au microscope optique et montrant la microstructure des pastilles issues des procédés de frittage $F_{1.1}$ (figure 3A) et $F_{1.3}$ (figure 3B) après attaque de $UO_2$.

Les figures 4A et 4B correspondent à des photographies prises au microscope optique et montrant la microstructure des pastilles issues des procédés de frittage $F_{2.1}$ (figure 4A) et $F_{2.2}$ (figure 4B) après attaque de $UO_2$.

Les figures 1A, 1B et 2 ont chacune fait l'objet d'un commentaire dans le précédent chapitre.

**EXPOSÉ DÉTAILLÉ DE MODES DE RÉALISATION PARTICULIERS**

**Exemple 1:**

**Fabrication de pastilles d'oxyde mixte d'uranium et de plutonium répondant à la formule $(U_{0,9023},Pu_{0,0977})O_2$**

Préparation de pastilles de poudres compactées

Le présent exemple 1 est réalisé à partir d'un mélange d'une poudre d'oxyde d'uranium $UO_2$ et d'une poudre d'oxyde de plutonium $PuO_2$. Ce mélange a une teneur atomique en Pu de 44% par rapport à la teneur atomique totale en Pu et U ainsi qu'une teneur en carbone de 1850 ppm +/- 100 ppm.

À ce mélange, on ajoute de la chamotte (c'est-à-dire une poudre d'oxyde mixte d'uranium et de plutonium (U, Pu)$O_2$ provenant du recyclage des rebuts de fabrication) pour former un mélange primaire. Cette chamotte est introduite dans une quantité permettant d'abaisser la teneur atomique en Pu de 44% à 28% par rapport à la teneur atomique totale en Pu et U dans ce mélange primaire.

Ce mélange primaire est ensuite broyé puis tamisé de manière à obtenir un mélange dit "mélange-mère".

On procède alors à la dilution en Pu de ce mélange-mère, par addition d'une poudre d'oxyde d'uranium $UO_2$, pour obtenir un mélange final de poudres dans lequel le rapport atomique U/Pu est de 90,23/9,77. Ce mélange final est alors compacté en pastilles se présentant sous la forme de comprimés cylindriques.

Trois procédés de frittage distincts, notés $F_{1.1}$, $F_{1.2}$ et $F_{1.3}$, ont été conduits sur ces pastilles pour obtenir des pastilles frittées d'oxyde mixte d'uranium et de plutonium répondant à la formule $(U_{0,9023},Pu_{0,0977})O_2$.

Procédé de frittage $F_{1.1}$ (de référence)

Une première série de pastilles est placée dans un four de frittage dans lequel elles sont soumises au cycle thermique suivant :

($a_{1.1}$) une montée en température, à une vitesse de 120°C/h, de la température ambiante jusqu'à une température de palier de 1700°C,

($b_{1.1}$) le maintien, pendant 4 h, à cette température de palier de 1700°C, puis

($c_{1.1}$) une descente en température, à une vitesse de 300°C/h, depuis la température de palier de 1700°C jusqu'à la température ambiante de 20°C.

Les trois étapes ($a_{1.1}$), ($b_{1.1}$) et ($c_{1.1}$) du cycle thermique détaillé ci-dessus ont été conduites dans une atmosphère comprenant de l'argon, du dihydrogène dans un rapport volumique Ar/$H_2$ de 95/5, et de l'eau dans un ratio $P(H_2)/P(H_2O) = 42$. Ce ratio de 42 correspond à une quantité de 1200 ppm d'eau dans l'atmosphère régnant dans le four.

Procédé de frittage $F_{1.2}$ (selon l'invention)

Une deuxième série de pastilles est placée dans un four de frittage dans lequel elles sont soumises au cycle thermique suivant :

($a_{1.2}$) une montée en température, à une vitesse de 120°C/h, de la température ambiante jusqu'à une première température intermédiaire de 1500°C,

(a'$_{1.2}$) une montée en température, à une vitesse de 120°C/h, de cette première température intermédiaire de 1500°C jusqu'à une température de palier de 1700°C,

(b$_{1.2}$) le maintien, pendant 4 h, à cette température de palier de 1700°C, puis

(c$_{1.2}$) une descente en température, à une vitesse de 300°C/h, depuis la température de palier de 1700°C jusqu'à la température ambiante de 20°C.

Les quatre étapes (a$_{1.2}$), (a'$_{1.2}$), (b$_{1.2}$) et (c$_{1.2}$) du cycle thermique détaillé ci-dessus ont été conduites dans une atmosphère comprenant de l'argon, du dihydrogène dans un rapport volumique Ar/H$_2$ de 95/5, et de l'eau :

- dans un ratio P(H$_2$)/P(H$_2$O) compris entre 1000 et 5000, soit une quantité d'eau comprise entre 50 ppm et 10 ppm dans l'atmosphère, lors de l'étape (a$_{1.2}$), puis
- dans un ratio P(H$_2$)/P(H$_2$O) = 42, soit 1200 ppm d'eau dans l'atmosphère, lors des étapes (a'$_{1.2}$), (b$_{1.2}$) et (c$_{1.2}$).

La quantité d'eau mise en oeuvre dans l'atmosphère lors de l'étape (a$_{1.2}$) est donnée par un intervalle, compte tenu des faibles quantités mises en jeu.

<u>Procédé de frittage F$_{1.3}$ (selon l'invention)</u>

Une troisième série de pastilles est placée dans un four de frittage dans lequel elles sont soumises au cycle thermique suivant :

(a$_{1.3}$) une montée en température, à une vitesse de 120°C/h, de la température ambiante jusqu'à une température de palier de 1700°C,

(b$_{1.3}$) le maintien, pendant 4 h, à cette température de palier de 1700°C, puis

(c$_{1.3}$) une descente en température, à une vitesse de 300°C/h, depuis la température de palier de 1700°C jusqu'à la température ambiante de 20°C.

Les trois étapes (a$_{1.3}$) à (c$_{1.3}$) du cycle thermique détaillé ci-dessus ont été conduites dans une atmosphère comprenant de l'argon, du dihydrogène dans un rapport volumique Ar/H$_2$ de 95/5, et de l'eau :

- dans un ratio P(H$_2$)/P(H$_2$O) compris entre 1000 et 5000, soit une quantité d'eau comprise entre 50 ppm et 10 ppm dans l'atmosphère, lors de l'étape (a$_{1.3}$), puis
- dans un ratio P(H$_2$)/P(H$_2$O) = 42, soit 1200 ppm d'eau dans l'atmosphère, lors des étapes (b$_{1.3}$) et (c$_{1.3}$).

**Caractérisation des pastilles d'oxyde mixte de formule (U$_{0,9023}$,Pu$_{0,0977}$)O$_2$**

Les trois séries de pastilles d'oxyde mixte (U$_{0,9023}$,Pu$_{0,0977}$)O$_2$ obtenues, après la mise en oeuvre des procédés de frittage F$_{1.1}$, F$_{1.2}$ et F$_{1.3}$ sont toutes sans défaut.

Ces trois séries de pastilles frittées ont été caractérisées, selon les protocoles décrits ci-après, pour déterminer leurs valeurs respectives de rapport O/M et de densité apparente (dont sont également déduites les valeurs de porosité ouverte et de porosité fermée), leur microstructure ainsi que leur stabilité thermique.

<u>Protocoles de caractérisation</u>

Le rapport O/M est déterminé par thermogravimétrie, sous dihydrogène saturé en eau et à une température de l'ordre de 950°C. La valeur obtenue l'est avec une très faible incertitude, typiquement inférieure à 0,003.

La densité apparente, notée Dh et exprimée en % de la densité théorique, est mesurée par pesée hydrostatique, dans du bromobenzène, au moyen d'un dispositif de densité hydrostatique, par application du théorème d'Archimède.

La porosité ouverte, notée Po, ainsi que la porosité fermée, notée Pf, sont déduites de la valeur de la densité apparente Dh par les formules ci-dessous :

$$Po = \frac{Dh - Dg}{Dth} \times 100$$

$$Pf = \frac{Dth - Dh}{Dth} \times 100$$

Dth et Dg correspondant respectivement à la densité théorique et à la densité géométrique.

La microstructure est analysée par observation, au microscope optique, en coupe longitudinale et en coupe radiale des pastilles frittées. La présence d'îlots d'$UO_2$ et de $UPuO_2$ est révélée par attaque chimique $UO_2$. Un étalonnage préalable effectué avec un micromètre objet certifié COFRAC N°74541B, ou 74541A, indique que l'incertitude sur les mesures dimensionnelles est typiquement inférieure à 10% en relatif.

Pour déterminer la stabilité thermique de la densité apparente des trois séries de pastilles frittées, on opère un traitement thermique de ces pastilles en les plaçant dans un four pendant 24 h à 1700°C dans une atmosphère formée par un mélange d'argon et de dihydrogène (dans un rapport volumique $Ar/H_2$ de 95/5). En sortie de four, et au terme des 24 h, on procède à la mesure, par pesée hydrostatique, de la densité apparente desdites pastilles. Les pastilles frittées sont dites "satisfaisantes", c'est-à-dire qu'elles présentent une densité apparente qui est thermiquement stable, lorsque la variation de densité apparente est comprise entre 0 et 1,9% après ce traitement thermique de 24 h à 1700°C.

La teneur en carbone est déterminée à l'aide d'un analyseur de marque Sylab (modèle CSBOX-HF) par la méthode de spectrophotométrie IR, après fusion des pastilles frittées.

Caractérisation des pastilles frittées

Les pastilles résultant des procédés de frittage $F_{1.1}$, $F_{1.2}$ et $F_{1.3}$ présentent toutes un rapport O/M égal à 2,00, en accord avec le potentiel d'oxygène fixé par le ratio $P(H_2)/P(H_2O) = 42$ lors des étapes $(b_{1.1})$, $(b_{1.2})$ et $(b_{1.3})$ de maintien de la température à 1700°C et des étapes $(c_{1.1})$, $(c_{1.2})$ et $(c_{1.3})$ de descente en température de 1700°C jusqu'à la température ambiante de 20°C.

Les autres données de caractérisation de ces pastilles issues des procédés de frittage $F_{1.1}$, $F_{1.2}$ et $F_{1.3}$ (déterminées selon les protocoles décrits ci-dessus) sont rassemblées dans le Tableau 1 ci-après.

Tableau 1

| Frittage | $F_{1.1}$ | $F_{1.2}$ | $F_{1.3}$ |
|---|---|---|---|
| Densité apparente (%Dth) | 93,5 | 96,6 | 97,1 |
| Pf (%) | 6,1 | 3,1 | 1,8 |
| Po (%) | < 1 | < 1 | < 1 |
| Stabilité thermique de la densité apparente | non satisfaisante | satisfaisante | satisfaisante |
| Figure | 3A | | 3B |

Comme il ressort du Tableau 1, lorsque l'on passe du frittage $F_{1.1}$ au frittage $F_{1.3}$, la densité apparente des pastilles frittées augmente tandis que leur porosité fermée respective diminue.

Plus précisément, la porosité des pastilles issues du frittage de référence $F_{1.1}$ est majoritairement fermée (6.1%) et se retrouve dans les amas de mélange-mère. Comme l'on peut le voir sur la figure 3A, ces amas de mélange-mère ont des dimensions situées entre 50 $\mu$m et 100 $\mu$m. Par ailleurs, les pastilles issues du frittage $F_{1.1}$ ne répondent pas au critère de stabilité thermique de la densité apparente, dans le sens où la variation de densité apparente s'établit à -1%, signifiant que les pastilles se sont dédensifiées et ont, par conséquent, gonflé après le traitement thermique de 24 h à 1700°C.

Les pastilles issues du frittage $F_{1.3}$ selon l'invention présentent la plus forte valeur de densité apparente (97,1%Dth). En outre, la figure 3B met clairement en évidence une meilleure homogénéité de la répartition du plutonium au sein de la microstructure de ces pastilles frittées, ce qui se traduit par un rapport volumique entre la phase plutonifère et la phase uranifère plus important. En outre, si l'on compare les figures 3A et 3B, on observe que les amas de mélange-mère présents dans les pastilles issues du frittage $F_{1.3}$ comportent moins de porosités que les amas de mélange-mère présents dans les pastilles issues du frittage $F_{1.1}$.

**Exemple 2** :

**Fabrication de pastilles d'oxyde mixte d'uranium et de plutonium répondant à la formule $(U_{0,7},Pu_{0,3})O_2$**

Préparation de pastilles de poudres compactées

Le présent exemple 2 est réalisé à partir d'un mélange d'une poudre d'oxyde d'uranium $UO_2$ et d'une poudre d'oxyde de plutonium $PuO_2$. Ce mélange a une teneur atomique en Pu de 30% par rapport à la teneur atomique totale en Pu et U ainsi qu'une teneur en carbone de 3500 ppm +/- 100 ppm.

Ce mélange est compacté en pastilles se présentant sous la forme de comprimés cylindriques.

Trois procédés de frittage distincts, notés $F_{2.1}$, $F_{2.2}$ et $F_{2.3}$, ont été conduits réalisés à partir de ces pastilles pour obtenir des pastilles frittées d'oxyde mixte d'uranium et de plutonium répondant à la formule $(U_{0,7},Pu_{0,3})O_2$.

Procédé de frittage $F_{2.1}$ (de référence)

Une première série de pastilles est placée dans un four de frittage dans lequel elles sont soumises au cycle thermique suivant :

($a_{2.1}$) une montée en température, à une vitesse de 50°C/h, de la température ambiante jusqu'à une température de palier de 1700°C,
($b_{2.1}$) le maintien, pendant 4 h, à cette température de palier de 1700°C, puis
($c_{2.1}$) une descente en température, à une vitesse de 300°C/h, depuis la température de palier de 1700°C jusqu'à la température ambiante de 20°C.

Les trois étapes ($a_{2.1}$), ($b_{2.1}$) et ($c_{2.1}$) du cycle thermique détaillé ci-dessus ont été conduites dans une atmosphère comprenant de l'argon, du dihydrogène dans un rapport volumique $Ar/H_2$ de 95/5, et de l'eau dans un ratio $P(H_2)/P(H_2O) \leq 500$. Ce ratio correspond à une quantité supérieure ou égale à 100 ppm d'eau dans l'atmosphère régnant dans le four et ce, tout au long du cycle thermique.

Procédé de frittage $F_{2.2}$ (selon l'invention)

Une deuxième série de pastilles est placée dans un four de frittage dans lequel elles sont soumises au cycle thermique suivant :

($a_{2.2}$) une montée en température, à une vitesse de 50°C/h, de la température ambiante jusqu'à une température de palier de 1700°C,
($b_{2.2}$) le maintien, pendant 4 h, à cette température de palier de 1700°C, puis
($c_{2.2}$) une descente en température, à une vitesse de 300°C/h, depuis la température de palier de 1700°C jusqu'à la température ambiante de 20°C.

Les trois étapes ($a_{2.2}$), ($b_{2.2}$) et ($c_{2.2}$) du cycle thermique détaillé ci-dessus ont été conduites dans une atmosphère comprenant de l'argon, du dihydrogène dans un rapport volumique $Ar/H_2$ de 95/5, et de l'eau :

• dans un ratio $P(H_2)/P(H_2O)$ compris entre 1000 et 10000, soit une quantité d'eau comprise entre 50 ppm et 5 ppm dans l'atmosphère, lors de l'étape ($a_{2.2}$), puis
• dans un ratio $P(H_2)/P(H_2O) \leq 500$, ce qui correspond à une quantité d'eau de 150 ppm, lors des étapes ($b_{2.2}$) et ($c_{2.2}$).

Dans les conditions précitées, on obtient des pastilles frittées caractérisées par un rapport O/M d'environ 1,94.

Une première partie, ou lot 1, des pastilles ainsi issues du frittage $F_{2.2}$ est réservée pour être caractérisées. La seconde partie, ou lot 2, des pastilles ainsi issues du frittage $F_{2.2}$ va être soumise à une étape complémentaire d'oxydation ménagée.

Procédé de frittage $F_{2.3}$ (selon l'invention)

La troisième série de pastilles est constituée par le lot 2 des pastilles frittées issues du frittage $F_{2.2}$ ci-dessus.

Ces pastilles frittées du lot 2 sont replacées dans le four de frittage dans lequel elles sont soumises à traitement thermique d'oxydation ménagée qui comprend les étapes successives suivantes, réalisées après l'étape ($c_{2.2}$) ci-dessus :

($d_{2.3}$) une montée en température, à une vitesse de 50°C/h, de la température ambiante jusqu'à une température de palier de 950°C,
($e_{2.3}$) le maintien à cette température de palier de 950°C pendant 4 h, puis
($f_{2.3}$) une descente en température, à une vitesse de 300°C/h, depuis la température de palier de 950°C jusqu'à la température ambiante de 20°C.

Dans les conditions précitées, on obtient des pastilles frittées caractérisées par un rapport O/M d'environ 1,97.

**Caractérisation des pastilles d'oxyde mixte de formule $(U_{0,7}, Pu_{0,3})O_2$**

Les données de caractérisation des pastilles issues des procédés de frittage $F_{2.1}$, $F_{2.2}$ et $F_{2.3}$ (déterminées selon les protocoles décrits ci-dessus) sont rassemblées dans le Tableau 2 ci-après.

Tableau 2

| Frittage | $F_{2.1}$ | $F_{2.2}$ | $F_{2.3}$ |
|---|---|---|---|
| Densité apparente (%Dth) | 90,0 | 97,9 | 97,9 |
| Pf (%) | >9 | 1,7 | 1,7 |
| Po (%) | < 1 | < 1 | < 1 |
| Rapport O/M | non mesuré | 1,94 | 1,97 |
| Teneur en C (ppm) | 100 | 200 | 200 |
| Stabilité thermique de la densité apparente | non satisfaisante | satisfaisante | satisfaisante |
| Figure | 4A | | 4B |

Comme précédemment, le Tableau 2 montre que, lorsque l'on passe du frittage $F_{2.1}$ au frittage $F_{2.3}$, la densité apparente des pastilles frittées augmente tandis que leur porosité fermée respective diminue.

La porosité des pastilles issues du frittage $F_{2.1}$ (de référence) est majoritairement une porosité fermée (9%). Comme l'on peut le voir sur la figure 4A, la microstructure des pastilles issues de ce frittage $F_{2.1}$ présentent quelques macropores ayant un diamètre de plusieurs centaines de $\mu m$ ainsi qu'une microporosité très importante. Par ailleurs, les pastilles issues du frittage $F_{2.1}$ ne répondent pas au critère de stabilité thermique de la densité apparente, en raison d'une porosité fermée trop élevée de ces pastilles frittées.

Les pastilles issues du frittage $F_{2.2}$ conforme à l'invention présentent une densité apparente de 97,9%Dth et répondent au critère de stabilité thermique de la densité apparente. Leur rapport O/M est de 1,94. Il est à noter qu'en l'absence d'une humidification volontaire introduite à partir de l'étape ($b_{2.2}$), un rapport O/M de l'ordre de 1,92 aurait été obtenu. En référence à la figure 4B, on observe que les pastilles issues du frittage $F_{2.2}$ présentent une microstructure caractérisée par une homogénéité améliorée, une porosité diminuée et, partant, une densité apparente augmentée par rapport à la microstructure des pastilles issues du frittage $F_{2.1}$.

Les pastilles issues du frittage $F_{2.3}$, qui correspondent à des pastilles issues du frittage $F_{2.2}$ puis soumises à une étape de traitement thermique complémentaire, dans une atmosphère comprenant de l'eau en une quantité similaire à celle mise en oeuvre dans les étapes ($b_{2.2}$) et ($c_{2.2}$), sont caractérisées par un rapport O/M supérieur à celui des pastilles issues du frittage $F_{2.2}$. Il est précisé que, pour obtenir une telle augmentation de 1, 94 à 1, 97 du rapport O/M, il aurait également été envisageable d'augmenter la quantité en eau dans l'atmosphère d'argon et de dihydrogène ($Ar/5\% \ H_2$) lors des étapes ($b_{2.2}$) et/ou ($c_{2.2}$) du procédé de frittage $F_{2.2}$, notamment en le portant de 100 ppm d'eau à 300 ppm.

**Revendications**

1. Procédé de frittage d'une poudre compactée d'au moins un oxyde d'un métal $M_1$ choisi parmi un actinide et un lanthanide, ce procédé comprenant les étapes successives (a) à (c) suivantes, réalisées dans un four et sous une atmosphère comprenant un gaz inerte, du dihydrogène et de l'eau :

   (a) une montée en température d'une température initiale $T_I$ jusqu'à une température de palier $T_P$, $T_P$ étant comprise entre 1400°C et 1800°C,
   (b) un maintien de la température à la température de palier $T_P$ pendant une durée comprise entre 1 h et 10 h, et
   (c) une descente en température depuis la température de palier $T_P$ jusqu'à une température finale $T_F$,

   **caractérisé en ce que** le ratio des pressions partielles $P(H_2)/P(H_2O)$ dans ladite atmosphère est tel que :

   - $500 < P(H_2)/P(H_2O) \leq 50000$, lors de l'étape (a), de $T_I$ jusqu'à atteindre une première température intermédiaire $T_{i1}$, entre 1000°C et $T_P$, et
   - $P(H_2)/P(H_2O) \leq 500$, au moins lors de l'étape (c), à partir d'une deuxième température intermédiaire $T_{i2}$ entre $T_P$ et 1000°C, jusqu'à atteindre $T_F$.

**2.** Procédé selon la revendication 1, dans lequel la première température intermédiaire $T_{i1}$, est comprise entre 1300°C et $T_P$.

**3.** Procédé selon la revendication 1 ou 2, dans lequel la deuxième température intermédiaire $T_{i2}$ est comprise entre $T_P$ et 1300°C.

**4.** Procédé selon l'une quelconque des revendications 1 à 3, dans lequel le ratio $P(H_2)/P(H_2O) \leq 500$ est mis en oeuvre dès que la première température intermédiaire $T_{i1}$, est atteinte et maintenu jusqu'à ce que $T_F$ soit atteinte.

**5.** Procédé selon l'une quelconque des revendications 1 à 3, qui comprend, en outre, entre les étapes (a) et (b), les étapes ($a_1$) à ($a_3$) successives suivantes :

($a_1$) un maintien, pendant une durée comprise entre 1 h et 10 h, de la température à la température de palier $T_P$,
($a_2$) une descente en température depuis la température de palier $T_P$ jusqu'à une troisième température intermédiaire $T_{i3}$,
($a_3$) une montée en température de la troisième température intermédiaire $T_{i3}$ jusqu'à la température de palier $T_P$,

et dans lequel le ratio $P(H_2)/P(H_2O)$ dans ladite atmosphère est tel que :

- $500 < P(H_2)/P(H_2O) \leq 50000$, lors des étapes (a), ($a_1$) et ($a_2$), et
- $P(H_2)/P(H_2O) \leq 500$, lors des étapes ($a_3$), (b) et (c).

**6.** Procédé selon la revendication 5, dans lequel la troisième température intermédiaire $T_{i3}$ est comprise entre 20°C et 500°C.

**7.** Procédé selon l'une quelconque des revendications 1 à 6, dans lequel $T_P$ est 1700°C.

**8.** Procédé selon l'une quelconque des revendications 1 à 7, dans lequel au moins l'une parmi $T_I$ et $T_F$ est la température ambiante.

**9.** Procédé selon l'une quelconque des revendications 1 à 8, dans lequel la montée en température de l'étape (a) s'effectue à une vitesse comprise entre 30°C/h et 400°C/h.

**10.** Procédé selon l'une quelconque des revendications 1 à 9, dans lequel la descente en température de l'étape (c) s'effectue à une vitesse comprise entre 100°C/h et 900°C/h.

**11.** Procédé selon l'une quelconque des revendications 1 à 10, comprenant, en outre, après l'étape (c), un traitement thermique d'oxydation.

**12.** Procédé selon l'une quelconque des revendications 1 à 11, dans lequel le gaz inerte est choisi parmi l'argon, l'hélium et l'azote, et est, avantageusement, l'argon.

**13.** Procédé selon l'une quelconque des revendications 1 à 12, dans lequel le rapport volumique entre le gaz inerte et le dihydrogène est compris entre 90/10 et 98/2 et est, avantageusement, de 95/5.

**14.** Procédé selon l'une quelconque des revendications 1 à 13, dans lequel $M_1$ est un actinide, avantageusement choisi parmi U, Pu et Th et, préférentiellement, parmi U et Pu.

**15.** Procédé selon l'une quelconque des revendications 1 à 13, dans lequel $M_1$ est un lanthanide, de préférence Ce.

**16.** Procédé selon l'une quelconque des revendications 1 à 15, dans lequel la poudre compactée comprend, en outre, au moins un oxyde d'un métal $M_2$ choisi parmi Sc, Y, un actinide et un lanthanide, $M_2$ étant différent de $M_1$, moyennant quoi, à l'issue de l'étape (c), on obtient un oxyde mixte comprenant $M_1$ et $M_2$.

**17.** Procédé selon la revendication 16, dans lequel $M_2$ est un actinide, avantageusement choisi parmi U, Pu et Th et, de préférence, parmi U et Pu.

**18.** Procédé de fabrication d'une pastille d'au moins un oxyde d'un métal $M_1$ choisi parmi un actinide et un lanthanide, notamment d'une pastille de combustible nucléaire, ledit procédé comprenant les étapes successives suivantes :

- une préparation d'une poudre dudit au moins un oxyde de métal $M_1$,
- un compactage de la poudre préparée sous la forme d'une pastille, et
- un traitement thermique de la pastille de poudre compactée par le procédé de frittage selon l'une quelconque des revendications 1 à 17.

**Patentansprüche**

1. Verfahren zum Sintern eines kompaktierten Pulvers aus wenigstens einem Oxid eines Metalls $M_1$, ausgewählt aus einem Aktinid und einen Lanthanid, wobei dieses Verfahren die folgenden aufeinanderfolgenden Schritte (a) bis (c) umfasst, die in einem Ofen und unter einer Atmosphäre realisiert werden, die ein Inertgas, Dihydrogen und Wasser enthält:

   (a) eine Temperaturerhöhung von einer Anfangstemperatur $T_I$ bis zu einer Plateautemperatur $T_P$, wobei $T_P$ zwischen 1400°C und 1800°C enthalten ist,
   (b) ein Halten der Temperatur auf der Plateautemperatur $T_P$ während einer Dauer, die zwischen 1 h und 10 h enthalten ist, und
   (c) eine Temperaturabsenkung von der Plateautemperatur $T_P$ bis zu einer Endtemperatur $T_F$,

   **dadurch gekennzeichnet, dass** das Verhältnis der Partialdrücke $P(H_2)/P(H_2O)$ in der Atmosphäre wie folgt ist:

   - $500 < P(H_2)/P(H_2O) \leq 50000$ während des Schritts (a) von $T_I$ bis zur Erreichung einer ersten Zwischentemperatur $T_{i1}$ zwischen 1000°C und $T_P$ und
   - $P(H_2)/P(H_2O) \leq 500$ wenigstens während des Schritts (c) ausgehend von einer zweiten Zwischentemperatur $T_{i2}$ zwischen $T_P$ und 1000°C bis zur Erreichung von $T_F$.

2. Verfahren nach Anspruch 1, bei dem die erste Zwischentemperatur $T_{i1}$ zwischen 1300°C und $T_P$ enthalten ist.

3. Verfahren nach Anspruch 1 oder 2, bei dem die zweite Zwischentemperatur $T_{i2}$ zwischen $T_P$ und 1300°C enthalten ist.

4. Verfahren nach einem der Ansprüche 1 bis 3, bei dem das Verhältnis $P(H_2)/P(H_2O) \leq 500$ verwendet wird, sobald die erste Zwischentemperatur $T_{i1}$ erreicht ist, und gehalten wird, bis $T_F$ erreicht ist.

5. Verfahren nach einem der Ansprüche 1 bis 3, das ferner zwischen den Schritten (a) und (b) die folgenden aufeinanderfolgenden Schritte $(a_1)$ bis $(a_3)$ umfasst:

   $(a_1)$ ein Halten der Temperatur auf der Plateautemperatur $T_P$ während einer Dauer, die zwischen 1 h und 10 h enthalten ist,
   $(a_2)$ eine Temperaturabsenkung von der Plateautemperatur $T_P$ bis zu einer dritten Zwischentemperatur $T_{i3}$,
   $(a_3)$ eine Temperaturerhöhung von der dritten Zwischentemperatur $T_{i3}$ bis zur Plateautemperatur $T_P$,

   und wobei das Verhältnis $P(H_2)/P(H_2O)$ in der Atmosphäre wie folgt ist:

   - $500 < P(H_2)/P(H_2O) \leq 50000$ während der Schritte (a), $(a_1)$ und $(a_2)$, und
   - $P(H_2)/P(H_2O) \leq 500$ während der Schritte $(a_3)$, (b) und (c).

6. Verfahren nach Anspruch 5, bei dem die dritte Zwischentemperatur $T_{i3}$ zwischen 20°C und 500°C enthalten ist.

7. Verfahren nach einem der Ansprüche 1 bis 6, bei dem $T_P$ 1700°C ist.

8. Verfahren nach einem der Ansprüche 1 bis 7, bei dem wenigstens eine von $T_I$ und $T_F$ die Umgebungstemperatur ist.

9. Verfahren nach einem der Ansprüche 1 bis 8, bei dem die Temperaturerhöhung des Schritts (a) mit einer Geschwindigkeit erfolgt, die zwischen 30°C/h und 400°C/h enthalten ist.

10. Verfahren nach einem der Ansprüche 1 bis 9, bei dem die Temperaturabsenkung des Schritts (c) mit einer Geschwindigkeit erfolgt, die zwischen 100°C/h und 900°C/h enthalten ist.

11. Verfahren nach einem der Ansprüche 1 bis 10, ferner umfassend nach dem Schritt (c) eine thermische Oxidationsbehandlung.

12. Verfahren nach einem der Ansprüche 1 bis 11, bei dem das Inertgas ausgewählt ist aus Argon, Helium und Stickstoff und vorzugsweise Argon ist.

13. Verfahren nach einem der Ansprüche 1 bis 12, bei dem das Volumenverhältnis zwischen dem Inertgas und dem Dihydrogen zwischen 90/10 und 98/2 enthalten ist, und vorzugsweise 95/5 beträgt.

14. Verfahren nach einem der Ansprüche 1 bis 13, bei dem $M_1$ ein Aktinid ist, vorzugsweise ausgewählt aus U, Pu und Th, und vorzugsweise aus U und Pu.

15. Verfahren nach einem der Ansprüche 1 bis 13, bei dem $M_1$ ein Lanthanid ist, vorzugsweise Ce.

16. Verfahren nach einem der Ansprüche 1 bis 15, bei dem das kompaktierte Pulver ferner wenigstens ein Oxid eines Metalls $M_2$ enthält, ausgewählt aus Sc, Y, einem Aktinid und einem Lanthanid, wobei $M_2$ von $M_1$ verschieden ist, wodurch man am Ende des Schritts (c) ein Mischoxid erhält, das $M_1$ und $M_2$ enthält.

17. Verfahren nach Anspruch 16, bei dem $M_2$ ein Aktinid ist, vorzugsweise ausgewählt aus U, Pu und Th, und vorzugsweise aus U und Pu.

18. Verfahren zur Herstellung eines Pellets aus wenigstens einem Oxid eines Metalls $M_1$, ausgewählt aus einem Aktinid und einem Lanthanid, insbesondere eines Kernbrennstoffpellets, wobei das Verfahren die folgenden aufeinanderfolgenden Schritte umfasst:

- eine Herstellung eines Pulvers des wenigstens einen Oxids des Metalls $M_1$,
- eine Kompaktierung des hergestellten Pulvers in der Form eine Pellets, und
- eine thermische Behandlung des Pellets aus kompaktiertem Pulver durch das Sinterungsverfahren nach einem der Ansprüche 1 bis 17.

**Claims**

1. A process for sintering a compacted powder of at least one oxide of a metal $M_1$ selected from an actinide and a lanthanide, this process comprising the following successive steps (a) to (c), carried out in a furnace and under an atmosphere comprising an inert gas, dihydrogen and water, of:

(a) increasing the temperature from an initial temperature $T_I$ to a hold temperature $T_P$, $T_P$ being between 1 400 °C and 1 800 °C,
(b) maintaining the temperature at the hold temperature $T_P$ for a duration between 1 h and 10 h, and
(c) decreasing the temperature from the hold temperature $T_P$ to a final temperature $T_F$,

**characterised in that** the ratio of the partial pressures $P(H_2)/P(H_2O)$ in said atmosphere is such that:

- $500 < P(H_2)/P(H_2O) \leq 50\ 000$, during step (a), from $T_I$ until a first intermediate temperature $T_{i1}$ between 1000 °C and $T_P$ is reached, and
- $P(H_2)/P(H_2O) \leq 500$, at least during step (c), from a second intermediate temperature $T_{i2}$ between $T_P$ and 1000 °C, until $T_F$ is reached.

2. The process according to claim 1, wherein the first intermediate temperature $T_{i1}$ is between 1 300 °C and Tp.

3. The process according to claim 1 or 2, wherein the second intermediate temperature $T_{i2}$ is between $T_P$ and 1 300 °C.

4. The process according to any of claims 1 to 3, wherein the ratio $P(H_2)/P(H_2O) \leq 500$ is implemented as soon as the first intermediate temperature $T_{i1}$ is reached and maintained until $T_F$ is reached.

5. The process according to any of claims 1 to 3, which further comprises, between steps (a) and (b), the following successive steps $(a_1)$ to $(a_3)$ of:

$(a_1)$ maintaining, for a duration between 1 h and 10 h, the temperature at the hold temperature $T_P$,
$(a_2)$ decreasing the temperature from the hold temperature $T_P$ to a third intermediate temperature $T_{i3}$,
$(a_3)$ increasing the temperature from the third intermediate temperature $T_{i3}$ to the hold temperature $T_P$,

and wherein the ratio $P(H_2)/P(H_2O)$ in said atmosphere is such that:

- $500 < P(H_2)/P(H_2O) \leq 50\,000$, during steps (a), $(a_1)$ and $(a_2)$, and
- $P(H_2)/P(H_2O) \leq 500$, during steps $(a_3)$, (b) and (c).

6. The process according to claim 5, wherein the third intermediate temperature $T_{i3}$ is between 20 °C and 500 °C.

7. The process according to any of claims 1 to 6, wherein $T_P$ is 1 700 °C.

8. The process according to any of claims 1 to 7, wherein at least one from $T_I$ and $T_F$ is room temperature.

9. The process according to any of claims 1 to 8, wherein increasing the temperature in step (a) is performed at a rate between 30 °C/h and 400 °C/h.

10. The process according to any of claims 1 to 9, wherein decreasing the temperature in step (c) is performed at a rate between 100 °C/h and 900 °C/h.

11. The process according to any of claims 1 to 10, further comprising, after step (c), an oxidation heat treatment.

12. The process according to any of claims 1 to 11, wherein the inert gas is chosen from argon, helium and nitrogen and is advantageously argon.

13. The process according to any of claims 1 to 12, wherein the volume ratio between the inert gas and dihydrogen is between 90/10 and 98/2 and is advantageously 95/5.

14. The process according to any of claims 1 to 13, wherein $M_1$ is an actinide, advantageously selected from U, Pu and Th and, preferentially, from U and Pu.

15. The process according to any of claims 1 to 13, wherein $M_1$ is a lanthanide, preferably Ce.

16. The process according to any of claims 1 to 15, wherein the compacted powder further comprises at least one oxide of a metal $M_2$ selected from Sc, Y, an actinide and a lanthanide, $M_2$ being different from $M_1$, whereby, at the end of step (c), a mixed oxide comprising $M_1$ and $M_2$ is obtained.

17. The process according to claim 16, wherein $M_2$ is an actinide, advantageously selected from U, Pu and Th and, preferably, from U and Pu.

18. A process for manufacturing a pellet of at least one oxide of a metal $M_1$ chosen from an actinide and a lanthanide, in particular a nuclear fuel pellet, said process comprising the following successive steps of:

- preparing a powder of said at least one oxide of metal $M_1$,
- compacting the powder prepared as a pellet, and
- heat treating the pellet of compacted powder by the sintering process according to any of claims 1 to 17.

$$500 < \frac{P(H_2)}{P(H_2O)} \leqslant 50000$$

$$\frac{P(H_2)}{P(H_2O)} \leqslant 500$$

## FIG. 1A

$$500 < \frac{P(H_2)}{P(H_2O)} \leqslant 50000$$

$$\frac{P(H_2)}{P(H_2O)} \leqslant 500$$

## FIG. 1B

Legend:

$$500 < \frac{P(H_2)}{P(H_2O)} \leqslant 50000$$

$$\frac{P(H_2)}{P(H_2O)} \leqslant 500$$

FIG. 2

# FIG. 3A

# FIG. 3B

FIG. 4A

FIG. 4B

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2860639